# EUROPÄISCHE PATENTSCHRIFT

(11) **EP 1 068 038 B1**
(45) Veröffentlichungstag und Bekanntmachung des Hinweises auf die Patenterteilung: **15.05.2002**
(21) Anmeldenummer: 98962435.8
(22) Anmeldetag: 09.12.1998
(51) Int. Cl.: B23B 27/04

(54) **HALTER FÜR SPANABHEBENDE WERKZEUG-EINSÄTZE**
HOLDING DEVICE FOR MACHINE TOOL INSERTS
SUPPORT POUR PLAQUETTES D'OUTIL D'USINAGE

(30) Priorität: 30.03.1998 DE 19814064
(43) Veröffentlichungstag der Anmeldung: 17.01.2001
(73) Patentinhaber: HARTMETALL-WERKZEUGFABRIK PAUL HORN GMBH, D-72072 Tübingen (DE)
(72) Erfinder: SCHÄFER, Hans, D-72810 Gomaringen (DE); OETTLE, Matthias, D-73240 Wendlingen (DE)
(74) Vertreter: Patentanwälte Bartels und Partner
(86) Internationale Anmeldenummer: EP9808018
(87) Internationale Veröffentlichungsnummer: WO9950012

(56) Entgegenhaltungen:
- EP-A- 0 385 495
- WO-A-95/13892

## Beschreibung

Die Erfindung bezieht sich auf einen Halter für spanabhebende Werkzeug-Einsätze, insbesondere Stech- oder Schneideinsätze, mit einem näherungsweise balkenförmigen Schneidenträger, einer in diesem endseitig ausgebildeten Ausnehmung, durch die am Schneidenträger ein durch Klemmbacken begrenzter Klemmsitz für die Aufnahme der Einsätze gebildet wird, und mit einem sich an das innere Ende der Ausnehmung als Verlängerung derselben anschließenden Schlitz mit einer Aufnahme, in der ein an einem Aufspreizschlüssel vorgesehener Spreizkörper aufnehmbar ist, der ein unrundes Querschnittsprofil besitzt und zum Aufspreizen des Schlitzes und damit dem Vergrößern der lichten Weite des Klemmsitzes verdrehbar ist.

Ein Halter dieser Art ist bereits aus der DE 39 06 822 C3 bekannt. Bei dem bekannten Halter ist ein Aufspreizschlüssel vorgesehen, dessen Spreizkörper ein elliptisches Querschnittsprofil aufweist. Die im Schlitz des Schneidenträgers vorgesehene Aufnahme für den Spreizkörper besteht aus zwei einander gegenüberliegenden Aussparungen in den Schlitzrändern, die entsprechend den beiden kleineren Scheitelkrümmungskreisen des elliptischen Querschnittsprofils des Spreizkörpers verlaufen. Wegen der für die sichere Funktion des bekannten Halters ausschlaggebenden genauen Übereinstimmung der jeweiligen Scheitelkrümmungskreise sowohl am Aufspreizschlüssel als auch am Schneidenträger ergibt sich beim bekannten Halter der Nachteil teurer Herstellungskosten, hauptsächlich bedingt durch die engen einzuhaltenden Fertigungstoleranzen.

Der Erfindung liegt die Aufgabe zugrunde, einen Halter dieser Art zu schaffen, der fertigungstechnisch besonders einfach herstellbar ist und sich daher durch vergleichsweise niedrige Herstellungskosten auszeichnet.

Bei einem Halter der eingangs genannten Art ist diese Aufgabe erfindungsgemäß dadurch gelöst, daß der Schlitz als Aufnahme für den einzusteckenden Spreizkörper an einem seiner beiden Ränder eine zumindest näherungsweise halbkreisförmige Erweiterung aufweist und daß das Querschnittsprofil des Spreizkörpers des Aufspreizschlüssels ein Poygonzug in Form eines gleich schenkligen Dreiecks ist, dessen Ecken mit jeweils gleichem Krümmungsradius abgerundet sind, der kleiner ist als der Radius der Erweiterung des Schlitzes.

Die die Aufnahme für den Spreizkörper bildende halbkreisförmige Erweiterung des Schlitzes ist fertigungstechnisch besonders einfach zu verwirklichen. Auch ist keine enge Tolerierung des Radius' der Erweiterung relativ zum Krümmungsradius der Abrundungen des Polygonzuzges des Spreizkörpers erforderlich.

Das Aufspreizen erfolgt durch ein Verdrehen des Spreizkörpers um 60° in eine Drehstellung, in der zwei abgrundete Eckbereiche des Polygonzuges innerhalb der halbkreisförmigen Erweiterung gelegen sind und der dritte abgerundete Eckbereich sich mit seinem Scheitel am gegenüberliegenden Rand des Schlitzes abstützt. In dieser Drehstellung, in der der Klemmsitz für die Aufnahme der Werkzeug-Einsätze geöffnet ist, befindet sich der Spreizkörper in der Aufnahme im Schlitz in Selbsthemmung, so daß die Bedienungsperson bei geöffnetem Klemmsitz für das Auswechseln von Einsätzen nicht festzuhalten braucht.

Eine besonders sichere Selbsthemmung durch eine leichte Verrastung des Spreizkörpers ergibt sich bei Ausführungsbeispielen, bei denen der der halbkreisförmigen Erweiterung gegenüberliegende Rand des Schlitzes eine geringfügige Vertiefung aufweist.

Nachstehend ist die Erfindung anhand eines in der Zeichnung dargestellten Ausführungsbeispieles im einzelnen erläutert. Es zeigen:
- Fig. 1: eine perspektivische Ansicht eines Aufspreizschlüssels des erfindungsgemäßen Halters;
- Fig. 2: eine gegenüber Fig. 1 in größerem Maßstab gezeichnete Vorderansicht des Spreizkörpers des Aufspreizschlüssels von Fig.1;
- Fig. 3: eine abgebrochen und perspektivisch gezeichnete Ansicht des vorderen Bereiches eines Ausführungsbeispieles des erfindungsgemäßen Halters;
- Fig. 4: eine Teilseitenansicht des in Fig. 3 gezeigten Halters ohne Werkzeug-Einsatz und
- Fig. 5 und 6: stark vergrößert gezeichnete schematische Darstellungen des dem Klemmsitz benachbarten Bereiches des Halters, wobei der Klemmsitz in Fig. 5 geschlossen und in Fig. 6 geöffnet dargestellt ist.

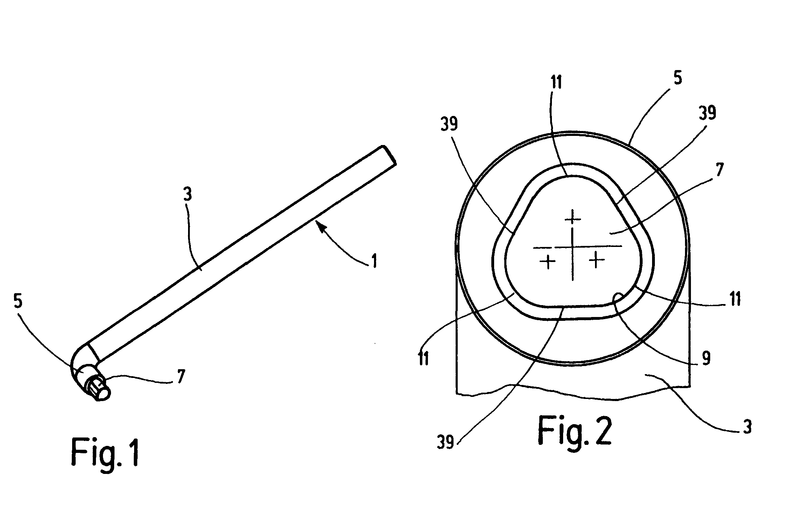

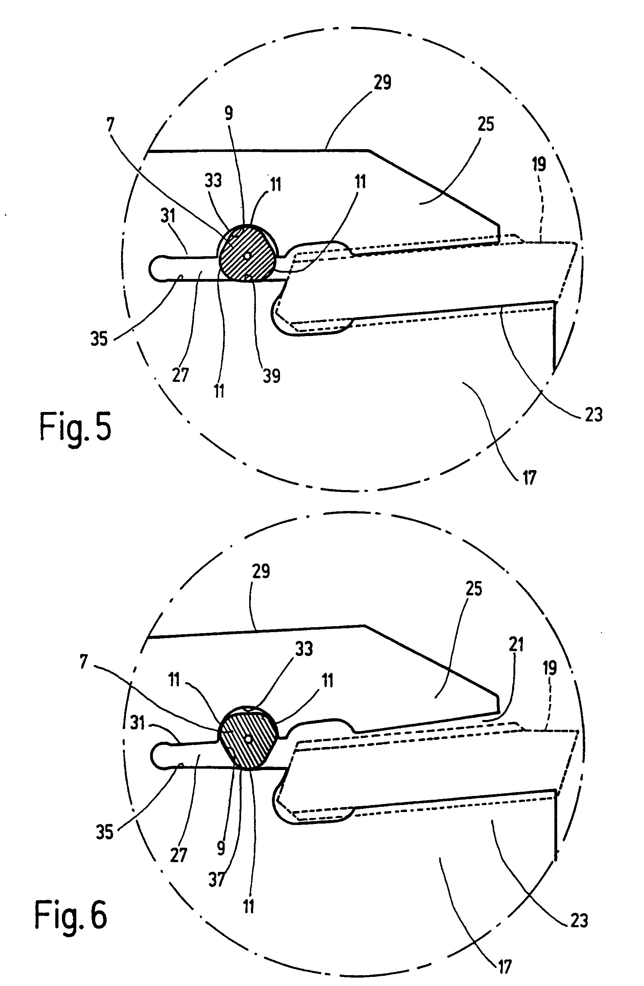

GEmäß Fig. 1 und 2 weist ein Aufspreizschlüssel 1 einen langgestreckten Griffteil 3 und einen endseitigen, abgewinkelten Betätigungsteil 5 mit einem Spreizkörper 7 auf. Dessen Querschnittsprofil entspricht, wie aus Fig. 2 und besonders deutlich aus Fig. 5 und 6 zu ersehen ist, einem Polygonzug 9 in Form eines gleichschenkligen Dreiecks mit abgerundeten Eckbereichen 11, die jeweils den gleichen Krümmungsradius aufweisen.

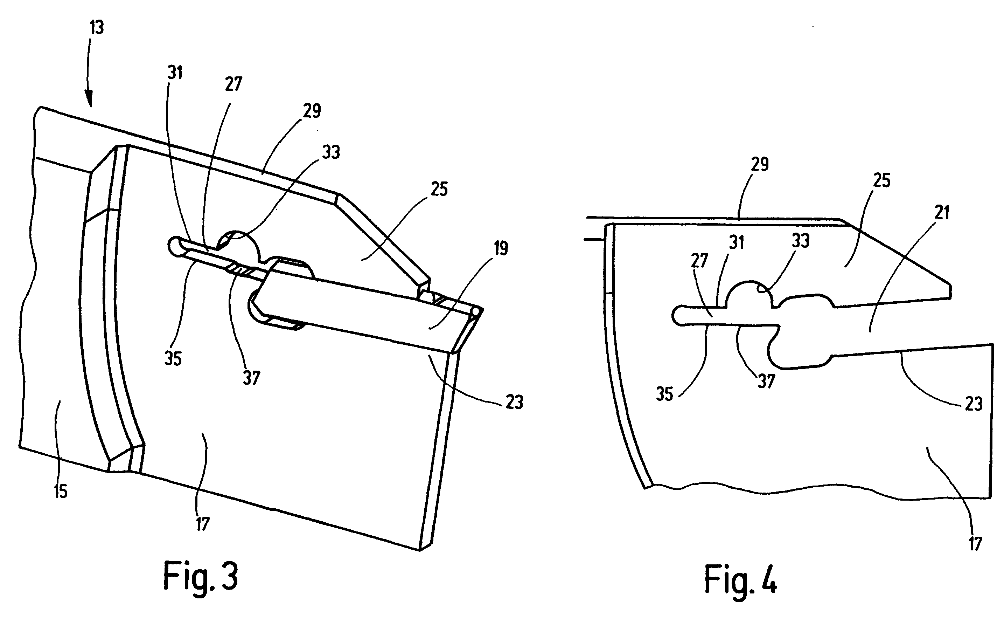

Wie am deutlichsten aus Fig. 3 zu ersehen ist, weist der Halter für Werkzeug-Einsätze einen Schneidenträger 13 auf, der einen in etwa balkenförmigen Körper 15 bildet, dessen Stärke im vorderen Endbereich 17 in Anpassung an im Halter aufzunehmende, schmale Stecheinsätze 19 verringert ist.

Wie am besten aus Fig. 4 bis 6 zu ersehen ist, befindet sich im vorderen Endbereich 17 eine nach vorn offene Ausnehmung 21, durch die ein Klemmsitz für die betreffenden Werkzeug-Einsätze gebildet wird, der in seiner lichten Weite durch eine untere Klemmbacke 23 und eine obere Klemmbacke 25 begrenzt ist. An das innere, verbreiterte Ende der Ausnehmung 21 schließt sich ein im wesentlichen geradlinig und parallel zum benachbarten Seitenrand 29 des Endbereiches 17 verlaufender Schlitz 27 an. In der Nähe des vorderen Endes des Schlitzes 27 weist dieser an seinem Rand 31, welcher dem Seitenrand 29 des Endbereiches 17 zugewandt ist, eine halbkreisförmige Erweiterung 33 auf, die im Schlitz 27 eine Aufnahme für den einzusteckenden Spreizkörper 7 des Aufspreizschlüssels 1 bildet. An seinem gegenüberliegenden Rand 35 weist der Schlitz 27, fluchtend zu der Erweiterung 33 eine dieser gegenüberliegende kleine Vertiefung 37 auf (siehe insbesondere Fig. 3).

Wie ersichtlich ist, bildet die Erweiterung 33, die sich gegen den benachbarten Seitenrand 29 des Endbereiches 17 erstreckt, an der benachbarten Klemmbacke 25 einen Bereich verringerter Querschnittsfläche, so daß sich für die Klemmbacke 25 eine gewisse elastische Spreizbarkeit ergibt, so daß der durch die Klemmbacken 23 und 25 gebildete Klemmsitz geöffnet werden kann, was in Fig. 6 stark übertrieben verdeutlicht ist. Dieses Öffnen erfolgt durch Verdrehen des Spreizkörpers 7 aus der in Fig. 5 gezeigten Stellung heraus um 60° in beliebiger Richtung. Wie Fig. 5 zeigt, ist der Spreizkörper 7, wenn der Radius der halbkreisförmigen Erweiterung 33 des Schlitzes 27 zumindest der Hälfte des größten Durchmessers des Polygonzuges 9 entspricht, der Spreizkörper 7 in einer Drehstellung einsteckbar, bei der eine Flachseite 39 des Polygonzuges 9 am Rand 35 des Schlitzes 27 anliegt und sich in der Erweiterung 33 einer der Eckbereiche 11 befindet. Die Öffnung des Klemmsitzes erfolgt durch das bereits erwähnte Verdrehen des Spreizkörpers 7 um 60° in die in Fig. 6 gezeigte Stellung, in der zwei Eckbereiche 11 sich in der Erweiterung 33 befinden und sich ein Eckbereich 11 am Rand 35 des Schlitzes 27 abstützt. Wie aus Fig. 6 ohne weiteres zu ersehen ist, wirkt in dieser Drehstellung kein Drehmoment auf den Spreizkörper 7, so daß Selbsthemmung gegeben ist. Darüber hinaus stellt die Vertiefung 27 im Rand 35 des Schlitzes 27 eine zusätzliche elastische Drehverrastung zur Verfügung, durch die der Bedienungsperson beim Verdrehen des Spreizkörpers signalisiert wird, daß die entsprechende Drehstellung erreicht ist, die der geöffneten Stellung des Klemmsitzes entspricht.

## Patentansprüche

1. Halter für spanabhebende Werkzeug-Einsätze, insbesondere Stechoder Schneideinsätze (19), mit einem näherungsweise balkenförmigen Schneidenträger (13), einer in diesem endseitig ausgebildeten Ausnehmung (21), durch die am Schneidenträger ein durch Klemmbacken (23, 25) begrenzter Klemmsitz für die Aufnahme der Einsätze (19) gebildet wird, und mit einem sich an das innere Ende der Ausnehmung (21) als Verlängerung derselben anschließenden Schlitz (27) mit einer Aufnahme, in der ein an einem Aufspreizschlüssel (1) vorgesehener Spreizkörper (7) aufnehmbar ist, der ein unrundes Querschnittsprofil besitzt und zum Aufspreizen des Schlitzes (27) und damit dem Vergrößern der lichten Weite des Klemmsitzes verdrehbar ist, **dadurch gekennzeichnet, daß** der Schlitz (27) als Aufnahme für den einzusteckenden Spreizkörper (7) an einem seiner beiden Ränder (31) eine zumindest näherungsweise halbkreisförmige Erweiterung (33) aufweist und daß das Querschnittsprofil des Spreizkörpers (7) des Aufspreizschlüssels (1) ein Polygonzug (9) in Form eines gleichschenkligen Dreiecks ist, dessen Ecken (11) mit jeweils gleichem Krümmungsradius abgerundet sind, der kleiner ist als der Radius der Erweiterung (33) des Schlitzes (27).

2. Halter nach Anspruch 1, **dadurch gekennzeichnet, daß** der Radius der halbkreisförmigen Erweiterung (33) des Schlitzes (27) zumindest der Hälfte des größten Durchmessers des Polygonzuges (9) entspricht.

3. Halter nach Anspruch 1 oder 2, **dadurch gekennzeichnet, daß** der der halbkreisförmigen Erweiterung (33) gegenüberliegende Rand (35) des Schlitzes (27) eine geringfügige Vertiefung (37) aufweist.

4. Halter nach einem der Ansprüche 1 bis 3, **dadurch gekennzeichnet, daß** sich der Schlitz (27) im wesentlichen parallel zum benachbarten Seitenrand (29) des Schneidenträgers (13) erstreckt.

5. Halter nach Anspruch 4, **dadurch gekennzeichnet, daß** die halbkreisförmige Erweiterung (33) des Schlitzes (27) sich gegen den benachbarten Seitenrand (29) des Schneidenträgers (13) hin erstreckt und an der banachbarten, elastisch spreizbaren Klemmbacke (25) einen Bereich verringerter Querschnittsfläche bildet.

6. Halter nach einem der Ansprüche 1 bis 5, **dadurch gekennzeichnet, daß** der Aufspreizschlüssel (1) L-förmig mit einem als Griffteil dienenden langgestreckten Schenkel (3) und einem den Spreizkörper (7) bildenden, abgewinkelten kurzen Schenkel (5) ausgebildet ist.

## Claims

1. Holding device for machine tool inserts, in particular parting or cutting inserts (19) with a bar-like carrier (13), a recess (21) at its end forming a clamping seat for holding the inserts (19), delimited by clamping jaws (23, 25), and with a slot (27) adjoining the inside end of the recess (21) as its extension with a location into which a spreading body (7) with a spreader key (1) can be inserted, the expanding body having an non-circular profile and being rotatable to widen the slot (27) thus enlarging the inside width of the clamping seat, **characterised in that** the slot (27) has at one of its two edges (31) an extension (33) which is at least semi-circular as a location for the insertable spreading body (7) and that the cross-section profile of the spreading body (7) of the spreader key (1) is a polygon (9) in the shape of an isosceles triangle the corners (11) of which are rounded with the same radius which is smaller than the radius of the extension (33) of the slot (27).

2. Holding device according to Claim 1, **characterised in that** the radius of the semi-circular extension (33) of the slot (27) is equivalent to at least half the maximum diameter of the polygon (9).

3. Holding device according to Claim 1 or 2, **characterised in that** there is a slight depression (37) in the edge (35) of the slot (27) opposite to the semi-circular extension (33).

4. Holding device according to one of the Claims 1 to 3, **characterised in that** the slot (27) essentially extends parallel to the adjoining side edge (29) of the cutter carrier (13).

5. Holding device according to Claim 4, **characterised in that** the semi-circular extension (33) of the slot (27) extends in the direction of the adjoining side edge (29) of the cutter carrier (13) and forms an area of a reduced cross-section surface on the adjoining, flexibly spreadable clamping jaw (25).

6. Holding device according to one of the Claims 1 to 5, **characterised in that** the spreader key (I) is L-shaped with a long arm (3) serving as a handle and an angled, short arm (5) forming the spreading body (7).

## Revendications

1. Support pour plaquettes d'outil d'usinage, en particulier des plaquettes piquantes ou coupantes (19), équipé d'un porte-lame (13) avec une forme approximative de poutre, avec un évidement (21) conçu côté extrémité dans ce porte-lame, par lequel est formé sur le porte-lame un siège de blocage limité par des mâchoires de serrage (23, 25) pour le logement des plaquettes (19), et d'une fente (27) se raccordant à l'extrémité inférieure de l'évidement (21) comme prolongement de celui-ci avec un logement, dans lequel on peut recevoir un corps d'écartement (7) prévu sur une clé d'écartement (1), lequel corps présente un profil de section ovale et peut tourner pour l'écartement de la fente (27) et donc l'agrandissement de la largeur intérieure du siège de serrage, **caractérisé en ce que** la fente (27) en tant que logement pour le corps d'écartement (7) à emboîter sur l'un de ses deux bords (31) présente un élargissement (33) de forme au moins approximativement semi-circulaire et **en ce que** le profil de section du corps d'écartement (7) de la clé d'écartement (1) est un tracé polygonal (9) sous la forme d'un triangle à côtés égaux dont les angles (11) sont arrondis avec un rayon de courbure respectivement identique, qui est inférieur au rayon de l'élargissement (33) de la fente (27).

2. Support selon la revendication 1, **caractérisé en ce que** le rayon de l'élargissement (33) semi-circulaire de la fente (27) correspond au moins à la moitié du plus grand diamètre du tracé polygonal (9).

3. Support selon la revendication 1 ou 2, **caractérisé en ce que** le bord (35) opposé à l'élargissement (33) semi-circulaire, de la fente (27) présente une cavité (37) minime.

4. Support selon l'une quelconque des revendications 1 à 3, **caractérisé en ce que** la fente (27) s'étend sensiblement parallèlement au bord latéral voisin (29) du porte-lame (13).

5. Support selon la revendication 4, **caractérisé en ce que** l'élargissement (33) semi-circulaire de la fente (27) s'étend en direction du bord latéral (29) voisin du porte-lame (13) et forme une zone avec une surface de section réduite sur la mâchoire de serrage (25) voisine et pouvant s'écarter élastiquement.

6. Support selon l'une quelconque des revendications 1 à 5, **caractérisé en ce que** la clé d'écartement (1) est conçue en forme de L avec une branche (3) étirée en longueur et servant de poignée et une branche (5) courte, coudée et formant le corps d'écartement (7).
